# EUROPEAN PATENT APPLICATION

(11) **EP 3 828 380 A1**
(43) Date of publication of application: **02.06.2021**
(21) Application number: 19212513.6
(22) Date of filing: 29.11.2019
(51) Int. Cl.: E21B 33/127, E21B 43/26, F24T 10/20, F24T 10/30

(54) **GEOTHERMAL ENERGY EXTRACTION SUBTERRANEAN SYSTEM FOR ACCUMULATING AND STORING HEAT**

(71) Applicant: Welltec Oilfield Solutions AG, 6300 Zug (CH)
(72) Inventor: HALLUNDBÆK, Jørgen, 6300 Zug (CH)
(74) Representative: Dragsted Partners A/S

(57) **Abstract**

The present invention relates to a by a geothermal energy extraction subterranean system for accumulating and storing heat from a subterranean formation outside periods where demand exceeds supply of energy, comprising an injection well comprising a top and a first well tubular metal structure arranged in a first borehole providing a first annulus therebetween and extending from surface into the subterranean formation, and a first production well comprising a top and a second well tubular metal structure arranged in a second borehole providing a second annulus therebetween and extending from surface into the subterranean formation, wherein the first and second well tubular metal structures each comprise a first annular barrier and a second annular barrier configured to expand in the annulus to abut a wall of the borehole, each annular barrier comprising a tubular metal part mounted as part of the well tubular metal structure, the tubular metal part having a first expansion opening and an outer face, an expandable metal sleeve surrounding the tubular metal part and having an inner face facing the tubular metal part and an outer face facing the wall of the borehole, each end of the expandable metal sleeve being connected with the tubular metal part, and an annular space between the inner face of the expandable metal sleeve and the tubular metal part, the expandable metal sleeve being expanded to abut a wall of the first borehole by entering pressurised fluid into the annular space through the first expansion opening, a first injection opening being arranged in the first well tubular metal structure between the first annular barrier and the second annular barrier, and a first production opening being arranged in the second well tubular metal structure between the first annular barrier and the second annular barrier, the injection well and the production well are subterranean fluidly connected by an enclosed volume, which is defined by a substantial impermeable rock having a permeability lower than 1 milli Darcy and the first and second annular barriers of the injection and production wells, so that fluid injected through the first injection opening is heated by the rock when passing the enclosed volume and entering the first production opening, the injection well and the production well each comprising at the top a flow control device for reducing the flow rate of the fluid through the enclosed volume in order to accumulate energy in the enclosed volume outside peak hours. Moreover, the present invention relates to A subterranean energy accumulation method for accumulating and storing energy outside peak hours of energy consumption in a geothermal energy extraction subterranean system.

## Description

The present invention relates to a geothermal energy extraction subterranean system for accumulating and storing heat from a subterranean formation. The present invention also relates to a subterranean energy accumulation method for accumulating and storing energy for electricity generation outside periods where demand exceeds supply of energy, e.g. during peak hours of energy consumption, in a geothermal energy extraction subterranean system.

In order to avoid using fossil-generated energy or nuclear plants, wind and solar energy has gained ground. Wind and solar energy is dependent on the fluctuating metrological conditions such as wind and sunlight. Modern offshore wind turbines can generate electricity 40-50% of the time. Wind and solar energy is thus not a steady energy resource all year round and cannot always kick in during periods where demand exceeds supply of energy, e.g. during peak hours or when else required to help stabilise the grid. Wind and solar energy therefore requires extra capacity units to be installed at various locations in order to close the gap.

Storage of energy has therefore become an increasingly hot topic due to the peaks of the electricity consumption demand, especially during peak hours in the evening, and such varying demand is difficult to accommodate by wind and solar energy alone. In some periods, the energy supply is therefore still dependent on fossil-generated energy.

Extraction of geothermal energy is a well-known method for exploiting the natural resources, and such geothermal energy systems are not influenced by wind or sunlight such as wind turbines and solar panels, respectively. Geothermal energy systems yield a steady output, since the heat from the permeable formation is generated and determined by the magma energy available and is normally used for baseload electricity. Reducing the output will thus increase the pressure in the producer well so that the vapour or steam liquifies and over time floods and kills the production well and thus the production. As such, existing geothermal energy systems cannot provide a surplus of energy during peak hours to assist wind and solar energy to accommodate the varying demand of electricity.

It is an object of the present invention to wholly or partly overcome the above disadvantages and drawbacks of the prior art. More specifically, it is an object to provide an improved geothermal energy extraction subterranean system capable of providing energy when demand exceeds supply of energy and thus provide varying energy amounts to accommodate the varying demand of electricity, e.g. during peak load, or during reduced supply due to unfavourable weather conditions, in order to avoid using fossil-generated energy and supplement wind and solar energy during periods where demand exceeds supply of energy.

The above objects, together with numerous other objects, advantages and features, which will become evident from the below description, are accomplished by a solution in accordance with the present invention by a geothermal energy extraction subterranean system for accumulating and storing heat from a subterranean formation outside periods where demand exceeds supply of energy, such as during peak hours of energy consumption for later electricity generation using said energy, comprising:
- an injection well comprising a top and a first well tubular metal structure arranged in a first borehole providing a first annulus therebetween and extending from surface into the subterranean formation, and
- a first production well comprising a top and a second well tubular metal structure arranged in a second borehole providing a second annulus therebetween and extending from surface into the subterranean formation,
   the first and second well tubular metal structures each comprise a first annular barrier and a second annular barrier configured to expand in the annulus to abut a wall of the borehole, each annular barrier comprising:
   - a tubular metal part mounted as part of the well tubular metal structure, the tubular metal part having a first expansion opening and an outer face,
   - an expandable metal sleeve surrounding the tubular metal part and having an inner face facing the tubular metal part and an outer face facing the wall of the borehole, each end of the expandable metal sleeve being connected with the tubular metal part, and
   - an annular space between the inner face of the expandable metal sleeve and the tubular metal part, the expandable metal sleeve being expanded to abut a wall of the first borehole by entering pressurised fluid into the annular space through the first expansion opening,
   wherein a first injection opening is arranged in the first well tubular metal structure between the first annular barrier and the second annular barrier, and a first production opening is arranged in the second well tubular metal structure between the first annular barrier and the second annular barrier, the injection well and the production well are subterranean fluidly connected by an enclosed volume, which is defined by a substantial impermeable rock having a permeability lower than 1 milli Darcy (mD) and the first and second annular barriers of the injection and production wells, so that fluid injected through the first injection opening is heated by the rock when passing the enclosed volume and entering the first production opening, and the injection well and the production well each comprising at the top a flow control device for reducing the flow rate of the fluid through the enclosed volume in order to accumulate energy in the enclosed volume outside periods where demand exceeds supply of energy.

By decreasing the flow rate of the fluid in the enclosed volume, the fluid is exposed to heat from a heat conductive surface of the rock over a longer period of time and thus is heated more than when flowing at a higher rate. Furthermore, during periods where demand exceeds supply of energy, e.g. during peak hours, the heat conductive surface of the rock is chilled when heating the passing fluid, and in order for the surface of the rock to regain its maximum heat, such heat needs to be transferred though the solid rock requiring a certain amount of time. When the rock surface is re-heating, the fluid is further heated accumulating heat therein until all fluid is transformed into vapour (or steam) or even gas, and the vapour pressure has reached its maximum pressure before transforming into liquid. The maximum pressure is given by the temperature of the rock and in the production well so that the pressure is kept sufficiently low to prevent the vapour from transforming into liquid. If the pressure gets too high, more vapour/steam from the production well is allowed to exit the well thereby maintaining the pressure in the production well below the transformation pressure. The flow rate of fluid in the injection well can be controlled so that the temporary chilling of the rock surface is kept at a minimum, and so that re-heating of rock is not necessary.

The present invention thus allows for a security of supply without having to rely on fossil generated energy.

The rock has a permeability lower than 1 milli Darcy (10⁻¹⁵ m²), and the enclosed volume is thereby substantially fluidly closed i.e. fluidly disconnected from other fluid reaservoirs in the formation, and is able to function as a deep steam storage and can accumulate energy over a period without overheating, since the rock needs to regain heat after being chilled. Thus, the enclosed volume is an artificial reservoir created in an extremely low permeable formation, i.e. the formation may have a numbers of small cracks. In this way, the geothermal energy extraction subterranean system can deliver a varying flow rate of vapour to the steam turbine generating electricity, and thus the system can deliver a significantly varying amount of energy over a time period.

By a substantial impermeable rock is meant a low permeable rock formation having a permeability lower than 1 milli Darcy (mD).

Moreover, the fluid in the production well may be vapour or steam.

Further, the flow rate may be reduced until the vapour front is close to the injection well.

In addition, the rock may be located in the lithosphere.

Also, the injection well may be at least 6,000 metres deep.

Moreover, the fluid in the enclosed volume may comprise liquid, vapour, steam or gas depending on flow rate, temperature, pressure etc.

Furthermore, an output of vapour of the production well may be controlled for accumulating and storing energy in the enclosed volume and for preventing part of the vapour from transforming into liquid in the production well while keeping the vapour in closed off system, below as above ground.

Additionally, the production well at the top may comprise a sensor in order to measure temperature and/or pressure.

Moreover, the production well at the top may comprise a pressure release device for preventing that the pressure in the production well exceeds a certain pressure.

Also, the pressure release device may be arranged at the power generation plant.

Further, the enclosed volume may be a coherent volume.

In addition, the enclosed volume may be one fracture.

The geothermal energy extraction subterranean system may also further comprise a steam turbine.

Also, the geothermal energy extraction subterranean system may further comprise a heat exchanger having a first part fluidly connected to the production well and a second part fluidly connected to the steam turbine, the second part having a second fluid receiving heat from the vapour from the production well in order to drive the steam turbine.

Furthermore, the production well and the injection well may be fluidly connected at the surface so as to form a closed fluid system.

Additionally, the geothermal energy extraction subterranean system may further comprise wind turbines and/or solar panels.

Moreover, the geothermal energy extraction subterranean system may further comprise a second production well having a second well tubular metal structure and a first production opening.

Further, the first well tubular metal structure may comprise additional annular barriers isolating a second enclosed volume.

In addition, the injection well and the production well may have a vertical part and a horizontal part, the enclosed volume extending from the horizontal part.

Also, the first well tubular metal structure and/or the second well tubular metal structure may comprise at least one secondary flow control device.

Furthermore, the flow control device of the injection well may comprise a pump controlling a pressure of the fluid in the first well tubular metal structure. Additionally, the geothermal energy extraction subterranean system may further comprise means for regulating the secondary flow control devices in order to selectively heat fluid in each enclosed volume so that only a part of the production area is in use at a time.

Moreover, the injection well and/or the production well may further comprise one or more laterals extending from a main part of the well, the lateral comprising a lateral well tubular metal structure fluidly connected with the well tubular metal structure in the main part of the well.

Further, the system may comprise the injection well and several production wells surrounding the injection well.

The present invention also relates to a subterranean energy accumulation method for accumulating and storing energy outside periods where demand exceeds supply of energy, e.g. during peak hours of energy consumption, in a geothermal energy extraction subterranean system according to any of the preceding claims, comprising:
- fluidly connecting the injection well and the production well by an enclosed volume defined by a substantial impermeable rock having a permeability lower than 1 milli Darcy and the first and second annular barriers of each the injection and production wells, and
- reducing the flow rate of fluid through the enclosed volume in a predetermined time before the periods where demand exceeds supply of energy, e.g. during peak hours of energy consumption, in order to accumulate energy in the enclosed volume.

In addition, the subterranean energy accumulation method may further comprise increasing the flow rate thereby releasing the accumulated energy during periods where demand exceeds supply of energy, e.g. during peak hours, and subsequently again reducing the flow rate of fluid through the enclosed volume in the predetermined time before the periods where demand exceeds supply of energy, e.g. during peak hours, in order to accumulate energy in the enclosed volume.

Furthermore, reducing the flow rate through the enclosed volume may be performed by controlling the output of the flow control device of the production well.

Moreover, the subterranean energy accumulation method may further comprise controlling the flow control device of the production well in relation to measured temperature and/or pressure in the production well.

Additionally, the energy may be accumulated in the enclosed volume by the substantially impermeable rock dissipating thermal energy to the fluid so that a phase transition of the fluid from liquid form to vapour occurs, thereby moving a vapour front from the production well towards the injection well so that the enclosed volume is increasingly filled with vapour during an accumulation period.

Furthermore, a minimum flow of fluid may pass the enclosed volume at any time.

Also, the energy may be accumulated in the enclosed volume by the reduced flow rate of the fluid in the enclosed volume since the substantially impermeable rock dissipates thermal energy to the fluid so that a phase transition of the fluid from liquid phase to vapour phase occurs whereby a vapour front will move from the production well towards the injection well during the accumulation of energy so that the enclosed volume is increasingly filled with vapour during accumulation period.

In addition, the subterranean energy accumulation method may further comprise releasing the accumulated energy during peak hours or when there is a reduced supply due to unfavourable weather conditions if needed, and subsequently again reducing the flow rate of fluid through the enclosed volume in the predetermined time before the next time demand exceeds supply of energy, e.g. during peak hours or reduced supply, in order to accumulate energy in the enclosed volume.

Further, the releasing of accumulated energy may be performed when the energy consumption during periods where demand, e.g. during peak hours, is larger than an energy supply of the energy supply grid.

Moreover, the subterranean energy accumulation method may further comprise determining the location of the substantial impermeable rock having a permeability lower than 1 milli Darcy before providing the enclosed volume.

Additionally, the subterranean energy accumulation method may further comprise providing the enclosed volume by hydraulic shearing.

Furthermore, the hydraulic shearing may be a multi-stage shearing process.

Also, the annular spaces of the first and second annular barriers may be pressure equalised during the shearing process.

Finally, the predetermined time before periods where demand exceeds supply of energy, e.g. during peak hours of energy consumption, may be in a short time after end of the periods where demand exceeds supply of energy, e.g. the peak hours.

The invention and its many advantages will be described in more detail below with reference to the accompanying schematic drawings, which for the purpose of illustration show some non-limiting embodiments and in which:
Fig. 1 shows a cross-sectional view of a geothermal energy extraction subterranean system having an injection well and a production well and a subterranean enclosed volume between the wells,
Fig. 2 shows another cross-sectional view of a geothermal energy extraction subterranean system where the production well has two laterals on opposite sides of the injection well,
Fig. 3 shows another cross-sectional view of a geothermal energy extraction subterranean system having one injection well and two production wells and several subterranean enclosed volumes between the wells,
Fig. 4a shows a cross-sectional view of an enclosed volume just after periods where demand exceeds supply of energy, e.g. after peak hours, where the enclosed volume has been emptied for vapour and is filled with liquified fluid from the injection well,
Fig. 4b shows the enclosed volume of Fig. 4a after periods where demand exceeds supply of energy, e.g. after peak hours, where the flow rate is reduced so that the fluid in the enclosed volume is heated, and the vapour front moves towards the injection well resulting in accumulation of energy,
Fig. 4c shows the enclosed volume of Figs. 4a and 4b just before periods where demand exceeds supply of energy, e.g. before peak hours, where the flow rate is still reduced so that the fluid in the enclosed volume is further heated, and the vapour front has moved further towards the injection well,
Fig. 5 shows a cross-sectional view of an annular barrier, and
Fig. 6 shows a cross-sectional view of an expansion unit of an annular barrier.

All the figures are highly schematic and not necessarily to scale, and they show only those parts which are necessary in order to elucidate the invention, other parts being omitted or merely suggested.

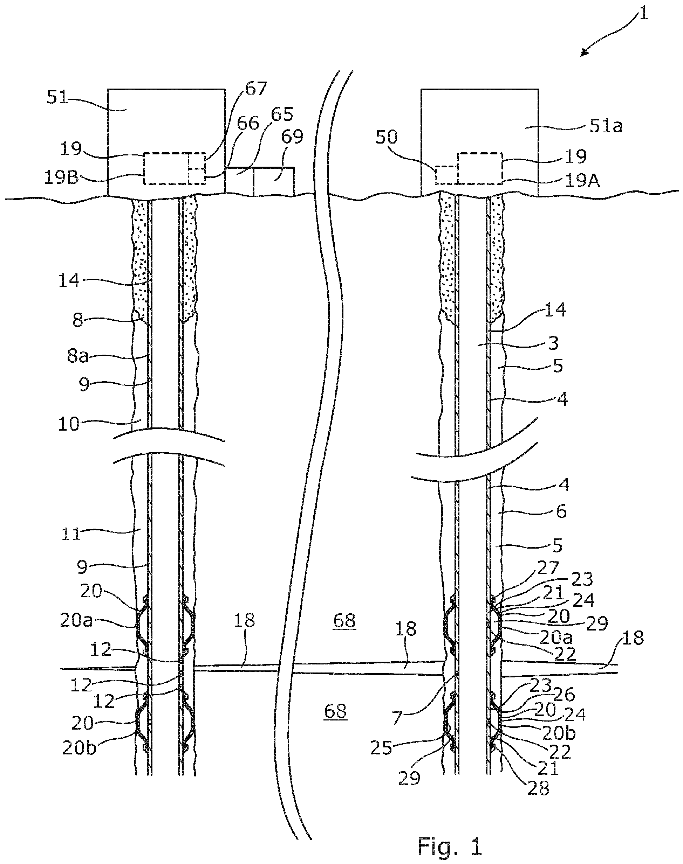

Fig. 1 shows a geothermal energy extraction subterranean system 1 for accumulating and storing heat from a subterranean formation 2 outside periods where demand exceeds supply of energy, e.g. outside peak hours of energy consumption. The geothermal energy extraction subterranean system comprises an injection well 3 and a production well. The injection well comprises a top and a first well tubular metal structure 4 with a first injection opening 7. The first well tubular metal structure is arranged in a first borehole 5 providing a first annulus 6 therebetween. The borehole extends from the surface into the subterranean formation. The first production well 8 comprises a top and a second well tubular metal structure 9 arranged in a second borehole 10 providing a second annulus 11 therebetween and extending from the surface into the subterranean formation. The first and second well tubular metal structures each comprise a first annular barrier 20, 20a and a second annular barrier 20, 20b expanded in the annulus and abutting a wall of the borehole. Each annular barrier comprises a tubular metal part 21 mounted as part of the well tubular metal structure, an expandable metal sleeve 24 surrounding the tubular metal part, and an annular space 29 between an inner face 25 of the expandable metal sleeve and the tubular metal part. The tubular metal part has a first expansion opening 22 and an outer face 23, and the expandable metal sleeve 24 has an outer face 26 facing the wall of the borehole. Each end 27, 28 of the expandable metal sleeve is connected with the tubular metal part. Each expandable metal sleeve is expanded abutting a wall of the first borehole by entering pressurised fluid into the annular space through the first expansion opening. The first injection opening 7 is arranged between the first annular barrier 20, 20a and the second annular barrier 20, 20b, and the first production opening 12 is arranged between the first annular barrier 20, 20a and the second annular barrier 20, 20b. The injection well and the production well are subterraneanly fluidly connected by an enclosed volume 18, which is defined by a substantial impermeable rock, the well tubular metal structure and the first and second annular barriers of the injection and production wells, so that fluid injected through the first injection opening is heated by the rock when passing the enclosed volume and entering the first production opening. By substantial impermeable rock is meant a rock formation having a permeability lower than 1 milli Darcy (10⁻¹⁵ m²). At the top, the injection well and the production well each comprises a flow control device 19, 19A, 19B for reducing the flow rate of the fluid through the enclosed volume in order to accumulate energy in the enclosed volume outside periods where demand exceeds supply of energy, e.g. outside peak hours.

By decreasing the flow rate of the fluid in the enclosed volume, the fluid is exposed to heat from the rock over a longer period of time and is heated more than when flowing at a higher rate. Furthermore, during periods where demand exceeds supply of energy, e.g. during peak hours, the heat conductive surface of the rock is chilled when heating the passing fluid, and as such heat needs to be transferred though the solid rock so that the surface of the rock regains its maximum heat. When the rock surface is re-heating, the fluid is further heated accumulating heat therein until all fluid is transformed into vapour (or steam), and the vapour pressure has reached its maximum pressure before transforming into liquid. The maximum pressure is given by the temperature of the rock and in the production well so that the pressure is kept sufficiently low to prevent the vapour from transforming into liquid. If the pressure gets too high, more vapour/steam from the production well is allowed to exit the well thereby maintaining the pressure in the production well below the transformation pressure.

The rock 68 has a permeability lower than 1 milli Darcy (10⁻¹⁵ m²), and the enclosed volume is thereby hermetically closed and is able to function as a deep steam storage and can accumulate energy over a period without overheating, since the rock may need to regain heat after being chilled. Thus, the enclosed volume is an artificial reservoir created in an extremely low permeable formation. In this way, the geothermal energy extraction subterranean system can deliver a varying flow rate of vapour to the steam turbine generating electricity, and thus the system can deliver a significantly varying amount of energy over a time period. Thus, the geothermal energy extraction subterranean system of the present invention can be "turned on and off" or lowered significantly depending on the needed demand and can thus co-function with wind and/or solar energy to accommodate the varying consumption demand in periods where demand exceeds supply of energy, e.g. in peak hours or during periods with lower wind or during darker hours. By "turned on and off" is meant that the output of vapour/steam of the production well is controlled for accumulating and storing energy in the enclosed volume and for preventing part of the vapour from transforming into liquid in the production well. The geothermal energy extraction subterranean system is not fully switched off since among others the steam generator needs to be kept heated to function properly when "turning on" the system again. Furthermore, the pressure downhole may not exceed the vapour-to-liquid phase transition pressure at the running temperature.

Furthermore, in periods where supply of energy exceeds demand, the surplus of wind or solar energy can be converted into heat in the injection fluid and injected via the injection well into the enclosed volume and stored therein to be released in periods where demand exceeds supply of energy. By injecting the surplus of energy in this way into the storage, i.e. the enclosed reservoir, the enclosed reservoir is faster fully loaded with energy to be released when needed.

By arranging the heat exchanging area in the impermeable part of the earth layers and when having annular barriers with expandable metal sleeves, the heat exchanging area can be made as an enclosed volume capable of accumulate energy since the enclosed volume can enclose the vapour or gas having a high pressure, which results from the reduced flow rate over a period of time. An impermeable rock does not leak the high-pressure vapour or gas through pores as would be the case in permeable formation. The annular barrier with expandable metal sleeves can withstand high pressure and high temperature compared to other alternative packers, and thus by using the annular barrier with expandable metal sleeves, energy in the form of high-pressure vapour or gas can be accumulated in the enclosed volume, which thus function as a deep steam storage. In permeable formation, the vapour/gas would leak into the formation and thus the known systems cannot accumulate such vapour/gas over a period of time. The combination of the closed low permeable rock formation and the closed loop mentioned above will reduce and prevent the loss of steam and vapour to the upper, more permeable formation and prevent the steam/vapour from getting into contact with the atmosphere.

The geothermal energy extraction subterranean system of the present invention is a metal system which does not deteriorate over time compared to rubber, cement, elastomer or polymeric materials as in known packers.

The geothermal energy extraction subterranean system 1 is at the surface fluidly connected with a district heating system for distributing heated fluid to end users and/or a heat to electricity generating plant 51, 51a for transforming heat into electricity. Each well is thus connected to the plant 51. The injection well 3 and the production well 8 are arranged at distance of 500-5000 meters apart below ground depending on the extension to the enclosed volume. The enclosed volume 18 is located in the lithosphere being the crust and uppermost solid mantle of the earth where the rock 68 is impermeable, i.e. has a permeability lower than 1 milli Darcy (10⁻¹⁵ m²). Depending on location, the impermeable rock, i.e. the lithosphere, may be located 10,000 metres down in the ground from the earth surface. Due to the thickness of the lithosphere in the ground of Denmark, the wells will at least be 6.000 meters deep.

As shown in Fig. 1, the enclosed volume 18 is a coherent volume and thus without pore generated fluid communication through the rock. The enclosed volume may be only one coherent fracture creating a storage volume deep down in the rock. The enclosed volume is made by using geothermal shearing, i.e. cold water may be injected at high pressure into the low permeability formation/rock in the direction of the stress field opening the formation/rock by using the pressure and the effect of the cold water on the hot rock, thus creating a heat conductivity surface of the rock.

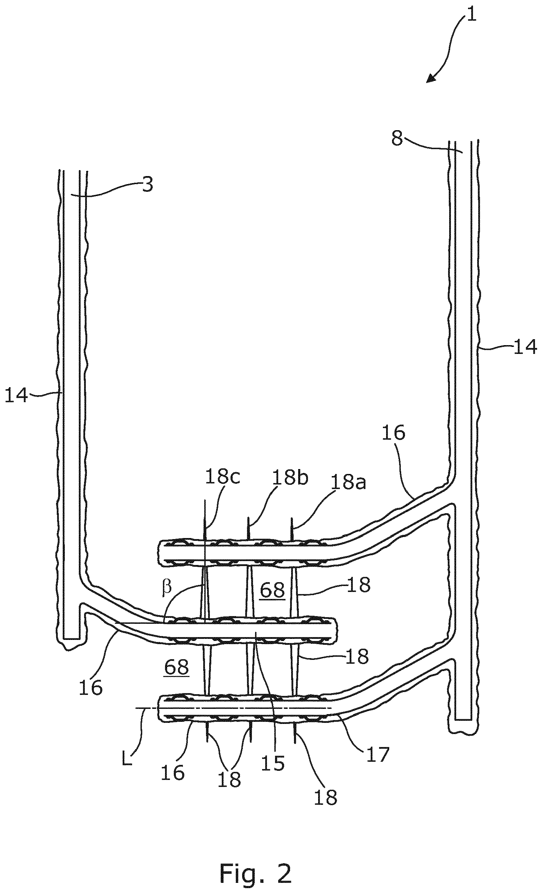

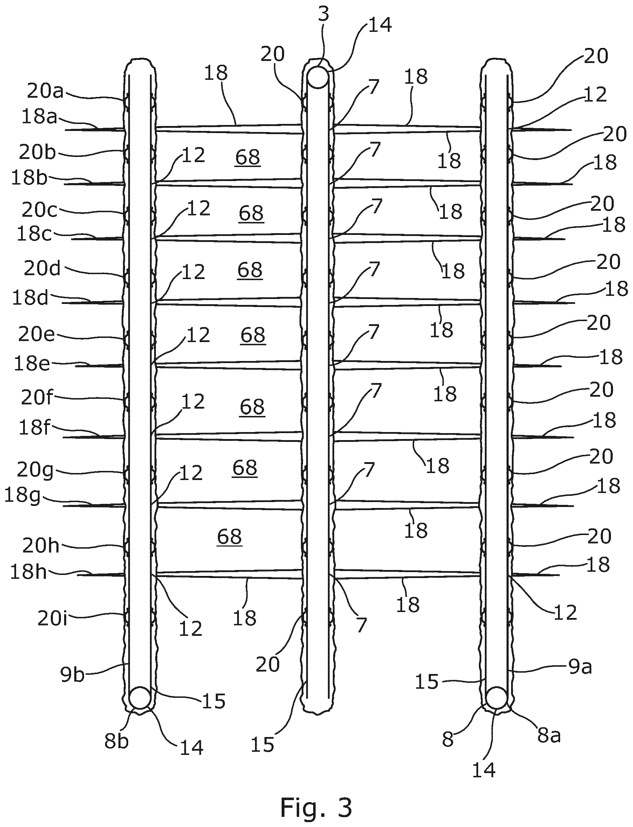

In Fig. 1, the wells 3, 8 are vertical wells, and in Figs. 2 and 3, the injection well 3 and the production well 8 have a vertical part 14 and a horizontal part 15 and the enclosed volume 18 extends from the horizontal part. In Fig. 3, the geothermal energy extraction subterranean system comprises one injection well 3 and two production wells 8, 8a, 8b, i.e. a first production well 8a and a second production well 8b having a second well tubular metal structure 9b and a first production opening 12b. The well tubular metal structure 4 comprises additional annular barriers 20, 20c, 20d, 20e, 20f, 20g, 20h, 20i isolating a second enclosed volume 18b, a third enclosed volume 18c, a third enclosed volume 18d, a fourth enclosed volume 18e, a fifth enclosed volume 18f, a sixth enclosed volume 18g, and a seventh enclosed volume 18h in the rock 68.

The enclosed volumes of Fig. 2 are shown as extending perpendicular to the longitudinal extension of the wells but the extension of the enclosed volumes may be at an angle β of less than 90° to the longitudinal extension L of the wells.

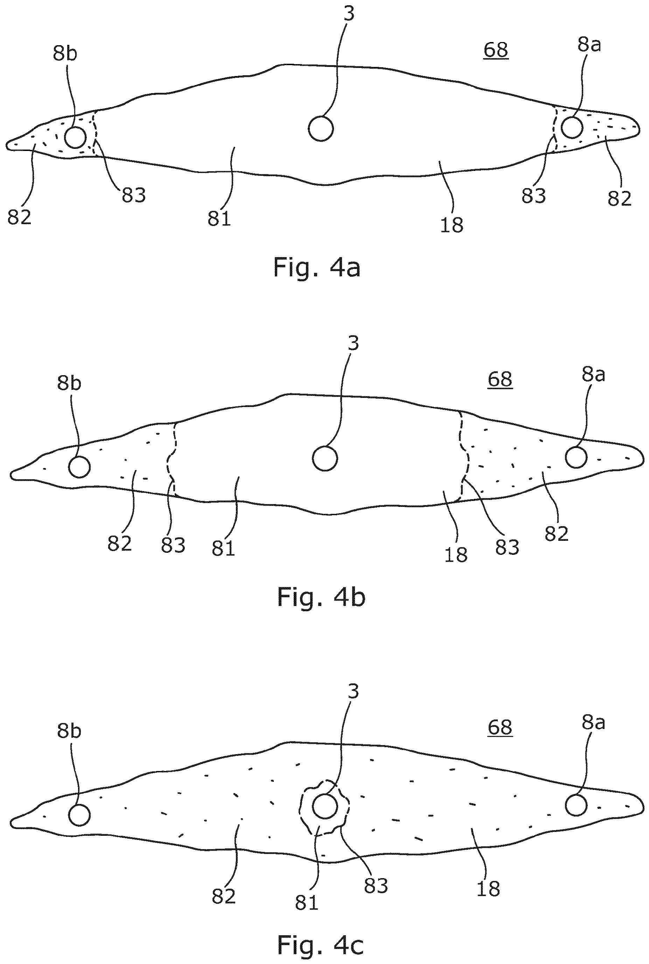

In order to accumulate energy in the enclosed volume 18 in the downhole reservoir, the flow rate of the fluid is reduced until a vapour front 83 of the vapour 82 is close to the injection well as shown in Fig. 4c. Fig. 4a shows the geothermal energy extraction subterranean system 1 in the situation where the enclosed volume 18 is almost fully filled with fluid in liquid phase 81 from the injection well, and the rock 68 has cooled so that the fluid at the predetermined flow rate is no longer vaporising. Then, the flow rate is reduced e.g. by reducing the flow through the injection well and reducing the flow out of the production well, and the fluid from the injection well is again vaporising in the enclosed volume 18. The energy is accumulated in the enclosed volume by the substantially impermeable rock 68 dissipating thermal energy to the fluid so that a phase transition of the fluid from liquid 81 form to vapour 82 occurs, thereby moving a vapour front 83 from the production well 8a, 8b towards the injection well 3 so that the enclosed volume 18 is increasingly filled with vapour 82 during an accumulation period. When the enclosed volume is filled with vapour, energy may still be accumulated by increasing the pressure of the vapour until a predetermined maximum pressure is reached. The predetermined maximum pressure is the pressure at which the phase transition from vapour to liquid occurs at a given temperature.

The flow control device at the top of the injection well may be a pump 50, as shown in Fig. 1, for controlling a pressure of the fluid in the first well tubular metal structure 4. At the top, the production well 8 comprises a sensor 66 in order to measure temperature and/or pressure in order to control the output of vapour in order to maintain the pressure in the well below the predetermined maximum pressure. As shown, the production well may comprise a pressure release device 67 for preventing that the pressure in the production well exceeds a certain pressure, i.e. the predetermined maximum pressure.

As shown in Fig. 1, the geothermal energy extraction subterranean system further comprising a steam turbine 69 for generating electricity from the vapour. The geothermal energy extraction subterranean system may further comprise a heat exchanger 65 having a first part fluidly connected to the production well and a second part fluidly connected to the steam turbine. The second part of the heat exchanger has a second fluid receiving heat from the vapour from the production well in order to drive the steam turbine. Hereby, the production well and the injection well are fluidly connected at the surface so as to form a closed fluid system. A closed loop requires a heat exchanger which will result in a slight decrease in the effect obtained by the geothermal energy extraction subterranean system, but such closed loop system is more environmentally friendly and prevents corrosive elements from the reservoir from causing damage to the turbine blades. When having an open system, the fluid supplied to the injection well has to undergo substantial chemical treatment before being supplied to the well in order to avoid formation of bacteria, and the vapour received from the production well has to be substantially chemically treated before being let out into the nature again. Fluid in a closed loop is only subjected to a small chemical treatment before re-entering the injection well, and this means that elements or substances found in the ground e.g. sulphur will not come into contact with the atmosphere before being returned to the formation below. The geothermal energy extraction subterranean system may further comprise wind turbines and/or solar panels so that when the wind turbines and/or solar panels generate more energy than needed, this surplus of energy is used to heat the fluid before being supplied to the injection well. Hereby, the energy from the wind turbines and/or solar panels are stored in the enclosed volume until needed during periods where demand exceeds supply of energy, e.g. during peak hours.

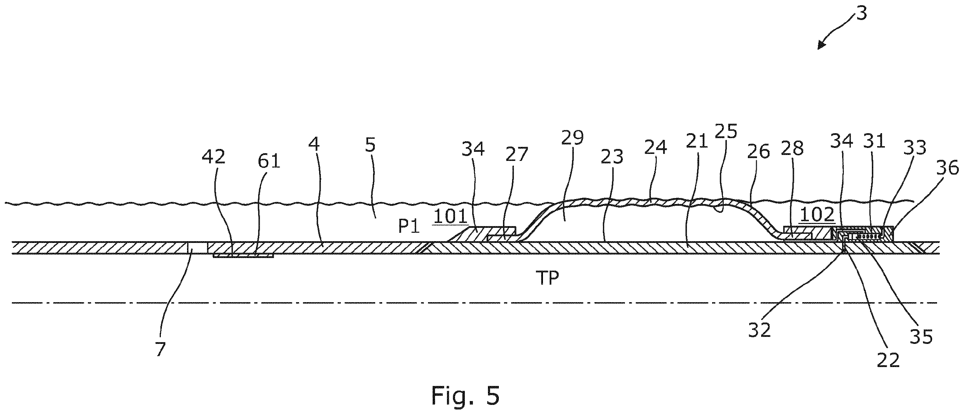

As shown in Fig. 5, the first well tubular metal structure 4 and/or the second well tubular metal structure 9 comprise at least one secondary flow control device 42. Hereby, the expansion of the annular barrier 20 can be controlled in that the pressure is controlled during expansion so that the differential pressure across the expandable metal sleeve 24 is not higher than a collapse rating of the annular barrier. The annular barrier is tested in order to determine at which differential pressure the expandable metal sleeve collapses at a certain temperature which is called the collapse rating. By being able to control the pressure in and on either side 101, 102 of the annular barrier 20, it is ensured that the pressure during expansion or shearing does not become so high as to move the well tubular metal structure longitudinally along the borehole and thus induce a risk or leaking across the annular barriers. The secondary flow control device 42 may be a shearing valve capable of withstanding the pressure needed to fracture the impermeable rock. The geothermal energy extraction subterranean system may further comprise means for regulating the secondary flow control devices 42 in order to selectively heat fluid in each enclosed volume 18, 18a, 18b so that only some of the enclosed volumes is in use at a time. Over time, the heat provided by the semi-molten asthenosphere may decrease, and then some of the enclosed volumes may be closed off. This allows the present invention to be used in geographically places like Denmark away from active tectonic plates and volcanos. When generating energy in a short period of time, e.g. during the few peak hours every day, it is of essence that the energy can be quickly obtained, and it is thus necessary to heat the fluid in the enclosed volume as much as possible, i.e. up to just below the maximum predetermined pressure. Over time, this may only be possible by shutting off some of the enclosed volumes.

As shown in Fig. 2, the injection well 3 and/or the production well 8 further comprise(s) one or more laterals 16 extending from a main part of the well 3, 8. The lateral 16 comprises a lateral well tubular metal structure 17 fluidly connected with the well tubular metal structure 4, 9 in the main part of the well 3, 8.

The geothermal energy extraction subterranean system is used for subterranean energy accumulation for accumulating and storing energy outside periods where demand exceeds supply of energy, e.g. outside peak hours of energy consumption, and this is obtained by fluidly connecting the injection well and the production well by an enclosed volume defined by a substantial impermeable rock having a permeability lower than 1 milli Darcy and the first and second annular barriers of each the injection and production wells, and then reducing the flow rate of fluid through the enclosed volume in a predetermined time before the periods where demand exceeds supply of energy, e.g. before peak hours, in order to accumulate energy in the enclosed volume to be ready to use during periods where demand exceeds supply of energy, e.g. during peak hours, by increasing the flow rate thereby releasing the accumulated energy and subsequently again controlling and reducing the flow rate of fluid through the enclosed volume in the predetermined time before the periods where demand exceeds supply of energy, e.g. before peak hours, in order to again accumulate energy in the enclosed volume.

In order to avoid liquid accumulating in the bottom of the production well due to transformation of vapour into liquid, the temperature and/or pressure in the production well is continuously measured in the production well, and the flow control device is controlled to release more vapour when the temperature and/or pressure has become too high. The energy is accumulated in the enclosed volume by the reduced flow rate of the fluid in the enclosed volume since the substantially impermeable rock dissipates thermal energy to the fluid so that a phase transition of the fluid from liquid phase to vapour phase occurs, whereby a vapour front will move from the production well towards the injection well during the accumulation of energy so that the enclosed volume is increasingly filled with vapour during accumulation period. Some of the vapour may even transform into the gas phase.

The accumulated energy is released when the energy consumption is larger than an energy supply of the energy supply grid, and subsequently the flow rate of fluid through the enclosed volume is reduced again in the predetermined time before the periods where demand exceeds supply of energy, e.g. before peak hours, in order to accumulate energy in the enclosed volume. The release of stored energy in the enclosed volume shall occur in a predetermined time before needed at the electricity grid, since the vapour/steam to be transformed into electricity in the steam turbine at the geothermal plant or the energy from vapour has to be submitted to the district heating supply. Thus, the energy from the enclosed volume may be used both during predetermined periods where supply is known to increase but should also be able to assist during unforeseen gaps in supply. The geothermal energy extraction subterranean system is always running ensuring a minimum of flow through the enclosed volume so that heat is accumulated in the injected liquid when it is transported from through the enclosed volume of the geothermal energy extraction subterranean system.

By "peak hours" is meant the time period when the energy consumption is larger than an energy supply of the energy supply grid.

In order to determine where a geothermal energy extraction subterranean system is to be located, location of the substantial impermeable rock having a permeability lower than 1 milli Darcy is determined, e.g. from regional geophysical data such as gravimetry and magnetic surveys or by sample-drilling in the ground, before providing the enclosed volume. The enclosed volume may be made by shearing, such as hydraulic shearing, or by drilling.

When performing hydraulic shearing, the pressure in the annular space of the annular barrier and/or on either side 101, 102 of the annular barrier 20 is controlled. Thus, the annular spaces of the first and second annular barriers are pressure equalised during the shearing process. The hydraulic shearing may be a multi-stage shearing process. The shearing process may then also be performed partly from the production well.

The first well tubular metal structure and/or the second well tubular metal structure may comprise a flow control device 42 as shown in Fig. 5. By having flow control devices 42, one flow control device 42 can be open at a time when shearing. The geothermal energy extraction subterranean system further comprises a pump 50 for controlling a pressure of the shearing fluid and of the fluid in the first well tubular metal structure. Thus, the pump controls the velocity of the fluid flowing in the subterranean system.

The annular barriers may be expanded by pressurising the well tubular metal structure from within and expanding the expandable metal sleeves of the annular barriers substantially simultaneously without the use of a tool. The annular barriers may also be expanded individually by means of a tool isolating a section of the well tubular metal structure opposite the expansion opening. The production and/or injection openings may subsequently be opened or made by perforation.

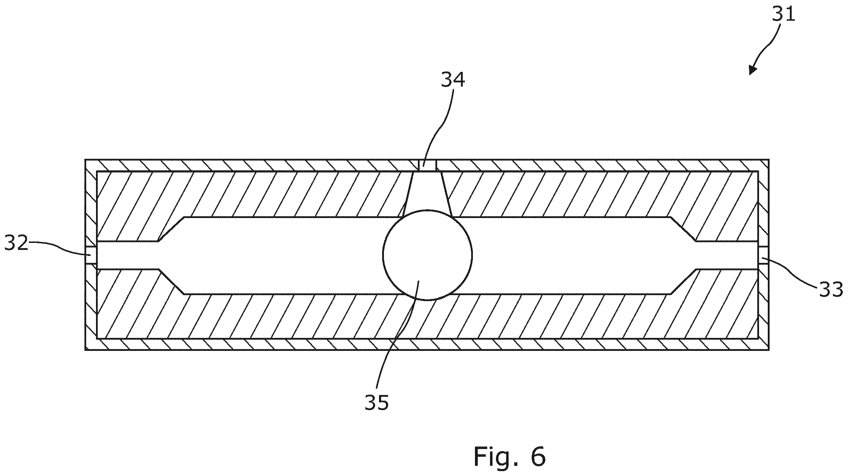

The geothermal energy extraction subterranean system may further comprise means for regulating the secondary flow control devices in order to control the flow rate to a predetermined enclosed volume or during shearing. The second well tubular metal structure may comprise a screen configured to filtrate the heated fluid before the heated fluid enters the second well tubular metal structure 9. The means for regulating may be a self-propelling driving unit and may also be used for sliding a sleeve 61 (shown in Fig. 6) for uncovering the injection opening 7 and/or the production opening 12.

The annular barrier may comprise a valve 36 in fluid communication with the expansion opening 22, as shown in Fig. 6. The valve 36 may be a two-vay valve or a three-way valve. When expanding the annular barrier, the valve 36 provides fluid communication from the well tubular metal structure and the space 29 and which provides fluid communication between the space and the annulus after expansion. When expanding the annular barriers by pressurising the well tubular metal structure, the opening 7 is closed in that the sleeve 61 is slid to cover the opening. The sleeve 61 is slid to the shown position where the sleeve no longer covers the opening before shearing occurs. When shearing the formation, the pressure in the annulus confined by the annular barriers may be higher than the pressure in the space 29, and the annular barrier comprises an expansion unit 31 comprising the valve. The expansion unit 31 has a first inlet 32 in fluid communication with the expansion opening, a second inlet 33 in fluid communication with the first zone and an outlet 34 in fluid communication with the annular space. The expansion unit 31 of Figs. 5 and 6 comprises an element 35 movable at least between a first position and a second position. In the first position, the expansion opening is in fluid communication with the outlet and the tubular pressure is higher than the first pressure, and in the second position the outlet is in fluid communication with the first production zone 101 and the first pressure P1 is higher than the tubular pressure TP. The expansion unit 31 may comprise a shuttle valve, as shown in Fig. 6, where the element 35 is comprised in the shuttle valve.

By fluid or well fluid is meant any kind of fluid that may be present in oil or gas wells downhole, such as natural gas, oil, oil mud, crude oil, water, etc. By gas is meant any kind of gas composition present in a well, completion, or open hole, and by oil is meant any kind of oil composition, such as crude oil, an oil-containing fluid, etc. Gas, oil, and water fluids may thus all comprise other elements or substances than gas, oil, and/or water, respectively.

By a well tubular metal structure is meant any kind of pipe, tubing, tubular, liner, string of metal etc. used subterraneously for geothermal energy extraction subterranean production.

A downhole driving unit may a downhole tractor used to propell itself all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor@.

Although the invention has been described in the above in connection with preferred embodiments of the invention, it will be evident for a person skilled in the art that several modifications are conceivable without departing from the invention as defined by the following claims.

## Claims

1. A geothermal energy extraction subterranean system (1) for accumulating and storing heat from a subterranean formation (2) outside periods where demand exceeds supply of energy, comprising:
- an injection well (3) comprising a top and a first well tubular metal structure (4) arranged in a first borehole (5) providing a first annulus (6) therebetween and extending from surface into the subterranean formation, and
- a first production well (8) comprising a top and a second well tubular metal structure (9) arranged in a second borehole (10) providing a second annulus (11) therebetween and extending from surface into the subterranean formation,
the first and second well tubular metal structures each comprise a first annular barrier (20, 20a) and a second annular barrier (20, 20b) configured to expand in the annulus to abut a wall of the borehole, each annular barrier comprising:
- a tubular metal part (21) mounted as part of the well tubular metal structure, the tubular metal part having a first expansion opening (22) and an outer face (23),
- an expandable metal sleeve (24) surrounding the tubular metal part and having an inner face (25) facing the tubular metal part and an outer face (26) facing the wall of the borehole, each end (27, 28) of the expandable metal sleeve being connected with the tubular metal part, and
- an annular space (29) between the inner face of the expandable metal sleeve and the tubular metal part, the expandable metal sleeve being expanded to abut a wall of the first borehole by entering pressurised fluid into the annular space through the first expansion opening,
wherein a first injection opening (7) is arranged in the first well tubular metal structure (4) between the first annular barrier (20, 20a) and the second annular barrier (20, 20b), and a first production opening (12) is arranged in the second well tubular metal structure (9) between the first annular barrier (20, 20a) and the second annular barrier (20, 20b), the injection well and the production well are subterranean fluidly connected by an enclosed volume (18), which is defined by a substantial impermeable rock having a permeability lower than 1 milli Darcy and the first and second annular barriers of the injection and production wells, so that fluid injected through the first injection opening is heated by the rock when passing the enclosed volume and entering the first production opening, and the injection well and the production well each comprising at the top a flow control device (19, 19A, 19B) for reducing the flow rate of the fluid through the enclosed volume in order to accumulate energy in the enclosed volume outside periods where demand exceeds supply of energy, such as outside peak hours.

2. A geothermal energy extraction subterranean system according to claim 1, wherein the fluid in the production well is vapour.

3. A geothermal energy extraction subterranean system according to claim 2, wherein the flow rate is reduced until the vapour front is close to the injection well.

4. A geothermal energy extraction subterranean system according to any of the preceding claims, wherein the rock is located in the lithosphere.

5. A geothermal energy extraction subterranean system according to any of the preceding claims, wherein an output of vapour of the production well is controlled for accumulating and storing energy in the enclosed volume and for preventing part of the vapour from transforming into liquid in the production well while keeping the vapour in closed off system, below as above ground.

6. A geothermal energy extraction subterranean system according to any of the preceding claims, wherein the production well at the top comprises a sensor in order to measure temperature and/or pressure.

7. A geothermal energy extraction subterranean system according to any of the preceding claims, wherein the production well at the top comprises a pressure release device for preventing that the pressure in the production well exceeds a certain pressure.

8. A geothermal energy extraction subterranean system according to any of the preceding claims, wherein the enclosed volume is a coherent volume.

9. A geothermal energy extraction subterranean system according to any of the preceding claims, further comprising a steam turbine.

10. A geothermal energy extraction subterranean system according to any of the preceding claims, further comprising a heat exchanger having a first part fluidly connected to the production well and a second part fluidly connected to the steam turbine, the second part having a second fluid receiving heat from the vapour from the production well in order to drive the steam turbine.

11. A subterranean energy accumulation method for accumulating and storing energy outside periods where demand exceeds supply of energy, such as outside peak hours of energy consumption, in a geothermal energy extraction subterranean system according to any of the preceding claims, comprising:
- fluidly connecting the injection well and the production well by an enclosed volume defined by a substantial impermeable rock having a permeability lower than 1 milli Darcy and the first and second annular barriers of each the injection and production wells, and
- reducing the flow rate of fluid through the enclosed volume in a predetermined time before the periods where demand exceeds supply of energy, such as before peak hours of energy consumption, in order to accumulate energy in the enclosed volume.

12. A subterranean energy accumulation method according to claim 11, further comprising increasing the flow rate thereby releasing the accumulated energy during periods where demand exceeds supply of energy, such as during peak hours, and subsequently again reducing the flow rate of fluid through the enclosed volume in the predetermined time before the periods where demand exceeds supply of energy, such as before peak hours, in order to accumulate energy in the enclosed volume.

13. A subterranean energy accumulation method according to claim 11 or 12, further comprising controlling the flow control device of the production well in relation to measured temperature and/or pressure in the production well.

14. A subterranean energy accumulation method according to any of claims 11-13, wherein the energy is accumulated in the enclosed volume by the substantially impermeable rock dissipating thermal energy to the fluid so that a phase transition of the fluid from liquid form to vapour occurs, thereby moving a vapour front from the production well towards the injection well so that the enclosed volume is increasingly filled with vapour during an accumulation period.

15. A subterranean energy accumulation method according to any of claims 11-14, further comprising determining the location of the substantial impermeable rock having a permeability lower than 1 milli Darcy before providing the enclosed volume.
